Europäisches Patentamt

European Patent Office

Office européen des brevets

(11) Publication number: **0 285 446 B1**

# EUROPEAN PATENT SPECIFICATION

(45) Date of publication of patent specification: **30.09.92**   (51) Int. Cl.⁵: **B29C 59/16**, //B29K23:00

(21) Application number: **88302960.5**

(22) Date of filing: **31.03.88**

(54) **Apparatus for surface treatment of synthetic organic polymer mouldings.**

(30) Priority: **31.03.87 JP 46622/87**

(43) Date of publication of application:
**05.10.88 Bulletin 88/40**

(45) Publication of the grant of the patent:
**30.09.92 Bulletin 92/40**

(84) Designated Contracting States:
**DE GB**

(56) References cited:
**FR-A- 1 092 664**
**FR-A- 1 095 063**
**FR-A- 2 110 278**

(73) Proprietor: **AGENCY OF INDUSTRIAL SCIENCE AND TECHNOLOGY**
**3-1, 1-chome, Kasumigaseki**
**Chiyoda-ku Tokyo(JP)**

Proprietor: **LAN TECHNICAL SERVICE CO., LTD.**
**45-11, Yoyogi 1-chome Shibuya-ku Tokyo(JP)**

Proprietor: **SUMITOMO CHEMICAL COMPANY, LIMITED**
**Kitahama 4-chome 5-33**
**Chuo-ku Osaka 541(JP)**

(72) Inventor: **Katoh, Koichiroh Industrial Products Research Ins.**
**1-1-4, Higashi**
**Tukuba City Ibaragi-ken 305(JP)**
Inventor: **Matsumoto, Yoshiie Lan Technical Service Co., Ltd.**
**45-11, Yoyogi 1-chome**
**Shibuya-ku Tokyo(JP)**
Inventor: **Shinonaga, Hideo**
**285-172, Higashi Terayama-cho**
**Chiba City Chiba Pref.(JP)**

(74) Representative: **Pilch, Adam John Michael et al**
**D. YOUNG & CO. 10 Staple Inn**
**London WC1V 7RD(GB)**

**Description**

This invention relates to apparatus for surface treatment of synthetic organic polymer mouldings which may be used to effect modification of the surface of a shaped body formed of a synthetic organic polymer having a low surface energy.

Since synthetic organic polymers such as polypropylene are hard and tough resins having a high moisture resistance, a high resistance to oil, and a high solvent resistance, and are easy to mould, they are widely used in the domestic and industrial fields. On the other hand when coating, printing, or adhesion is required on the surface of, for example, a polypropylene moulding (hereinafter sometimes abbreviated to just "moulding") so as to increase the value of the moulding, a difficulty is encountered in securing good adherence because the surface of the moulding is inactive. Accordingly, treatment methods for modifying the surface of a moulding to enable high adherence to be secured have been previously proposed.

Such treatment methods include sandblasting treatments, treatments with solvents, treatments with chromic acid mixtures, flame treatments, corona discharge treatments, plasma treatments, methods of providing functional groups at the surface of the moulding, and methods of grafting on the surface of the moulding. These methods are known but will be briefly explained.

The sandblasting treatment is a method in which a particulate abrasive material is collided with the surface of a moulding at high speed so as to make the surface of the moulding coarse. However, the working environment and the moulding are contaminated with the abrasive material. The surface of the moulding becomes opaque. Further, removal of the abrasive material which has intruded into the surface of the moulding is impossible.

The treatment with a solvent is a method in which a moulding is placed in a vapour of a halogenated hydrocarbon heated to about 80°C for a short period of time to swell the amorphous surface of the moulding. However, where coating is conducted on the surface of the treated moulding, an undercoat containing chlorinated polypropylene must first be deposited on the surface. The effect of the treatment is lost in a short time. Since the heated vapour of a halogenated hydrocarbon is used, it is hazardous to workers and liable to bring about corrosion of the apparatus.

The treatment with a chromic acid mixture is a method in which a moulding is immersed in a chromic acid mixture heated to a temperature of about 100°C for about 5 minutes to treat the surface of the moulding. However, it is difficult to make the waste liquid from the treatment pollution-free.

The flame treatment is a method in which the surface of a moulding is treated with an oxidizing flame of a gas containing excess air. However, deformation or melting of the moulding may be caused in some cases.

The corona discharge treatment is a method in which a voltage is applied between an electrode and a conductive roll, and the surface of the moulding is treated with the generated corona discharge. However, only film mouldings can be treated by this method.

The plasma treatment is a method in which a low temperature plasma is allowed to act on the surface of a moulding to effect treatment of the surface. However, the cost of the equipment is high.

The method of providing functional groups at the surface of a moulding includes irradiating the surface of a moulding with ultraviolet light in the presence of chlorine, followed by treatment with an alkali. This method is not preferred because a very hazardous gas is used.

The method of grafting on the surface of a moulding includes incorporating benzophenone into a polypropylene film, after which acrylamide is graft-photopolymerised with the surface of the polypropylene film in an atmosphere from which oxygen is excluded. However, it is not preferred from the viewpoint of economic efficiency, because the treatment steps are complicated.

Thus, the previously-proposed surface treatment methods are all unsatisfactory. Accordingly, there has been a need for a surface treatment method satisfying particular criteria, such as certainty, safety and economic efficiency.

As a result of intensive investigations with a view to finding a treatment method suitable for modification of the surface of a polypropylene moulding, it was found that, when coating, printing or the like is conducted on the surface of a polypropylene type resin moulding which has been contacted for a sufficient period of time with a heated solvent comprising benzene as the main component and irradiated by ultraviolet light having a wavelength of 300nm or less, the adherence of the moulding is greatly improved. This method has been proposed by one of the present applicants in Japanese Patent Application No.219,811/1985.

However, there has been no apparatus suitable for industrially practicing the method proposed in Japanese Patent Application No. 219,811/1985.

French Patent Application No. FR-A-1 095 063 upon which the preamble of the independent claim is based, discloses a method of surface treatment of a synthetic organic polymer in which the polymer is

2

heated to a temperature between 25 and 95°C, and is treated with an agent such as an acid, preferably under exposure to ultraviolet light having a wavelength no greater than 360 nm.

According to the present invention there is provided apparatus for surface treatment of a synthetic organic polymer moulding, the apparatus comprising:

a treatment chamber for contacting the surface of the synthetic organic polymer moulding with an agent such that the surface treatment takes place at a predetermined temperature; and

an irradiation means for irradiating the surface of the moulding with ultraviolet light;

characterised in that:

the agent in the treatment chamber is an ultraviolet light absorbing solvent;

the irradiation means comprises an irradiation chamber for irradiating the surface of the surface treated moulding with ultraviolet light having a main wavelength of substantially 184.9 nm; and

a transfer mechanism is provided for transferring the moulding through the treatment chamber and the irradiation chamber in this order.

Embodiments of the present invention, to be described in more detail hereinafter, provide surface treatment apparatus for enabling modification of a synthetic organic polymer moulding to be safely and economically conducted with certainty.

In an embodiment according to a first aspect of the invention, a preliminary heating chamber is provided for preliminary heating of the moulding before solvent treatment.

In another embodiment according to a second aspect of the invention, the solvent in the treatment chamber is heated to the predetermined temperature.

The term "synthetic organic polymer moulding" herein means a shaped body formed of a synthetic organic polymer and "synthetic organic polymer" herein means a synthetic resin having low surface energy.

The term "synthetic organic polymer" includes a resin mainly comprising a synthetic organic polymer, and examples thereof include the following materials:

(1) polypropylene;

(2) copolymers of at least two kinds selected from polypropylene, polyethylene, ethylene propylene rubber and analogous polymers, and blends of at least two kinds selected from the above-mentioned copolymers, polypropylene, polyethylene, ethylene propylene rubber and analogous polymers;

(3) mixtures of polypropylene with an additive and/or a filler;

(4) mixtures of a copolymer or blend as mentioned in (2) above with an additive and/or a filler;

(5) ethylene propylene rubber;

(6) mixtures of ethylene propylene rubber with an additive and/or a filler;

(7) polyethylene;

(8) mixtures of polyethylene with an additive and/or a filler;

(9) polymethylpentene;

(10) polyacetal, and a copolymer or blend of polyacetal with other polymer(s);

(11) mixtures of polyacetal, or a copolymer or a blend of polyacetal with other polymer(s) with an additive and/or a filler; and

(12) other substances whose surfaces have low surface energy and to which it is difficult to adhere a coating, an adhesive, a printing ink, a functional material or the like.

The term "moulding" as used herein is intended to encompass such items having various shapes, such as a film, a plate, a complicatedly shaped article in three dimensions, or a fibre. Any moulding method may be employed.

Examples of the ultraviolet light absorbing solvent include aromatic hydrocarbons such as benzene, toluene, xylene (o-, m- and p-) and tetralin (trade mark); halogenated aromatic hydrocarbons such as chlorobenzene, dichlorobenzene (o-, m- and p-) and trichlorobenzene; and halogenated aliphatic hydrocarbons such as chloroform, carbon tetrachloride, a dichloroethane, 1,1,1-trichloroethane, 1,1,2-trichloroethane, a tetrachloroethane, a trichloroethylene or tetrachloroethylene.

In treatment apparatus embodying the first aspect of the invention, while a polypropylene type resin moulding is transferred through a preliminary heating chamber, a solvent treatment chamber, and an ultraviolet irradiation chamber in this order by a transfer mechanism, specific treatment steps for modification of the surface of the moulding are automatically conducted.

In the case of this type of treatment apparatus, a moulding is heated in the preliminary heating chamber and the heated moulding is contacted with, for example, benzene as an ultraviolet light absorbing solvent. Therefore, even if the benzene is not heated, the same effect as in the case where heated benzene is used can be obtained. Further, even if the moulding is contacted with benzene for a shorter period of time than the time of contact in the case where heated benzene is used, the same effect as in the case where heated

EP 0 285 446 B1

benzene is used can be obtained.

In surface treatment apparatus embodying the second aspect of the invention, contact of a moulding with an active ultraviolet light absorbing solvent heated to a predetermined temperature and irradiation of the moulding by ultraviolet light are automatically effected in this order.

The invention will now be described by way of example with reference to the accompanying drawings, throughout which like parts are referred to by like references, and in which:

Figures 1A and 1B are respectively a plan view and a side view schematically showing an example of apparatus for surface treatment of a synthetic organic polymer moulding according to a first embodiment of the invention;

Figures 2A and 2B are plan views and Figures 2C and 2D are side views respectively of first and second parts of an example of apparatus for surface treatment of a synthetic organic polymer moulding according to a second embodiment of the invention;

Figure 2E is a cross-sectional view showing part of the apparatus along a line I-I in Figure 2A;

Figures 3A and 3B are plan views and Figures 3C and 3D are side views respectively of first and second parts of another example of apparatus for surface treatment of a synthetic organic polymer moulding according to a further embodiment of the present invention; and

Figure 3E is a cross-sectional view showing part of the apparatus along a line I-I in Figure 3A.

Apparatus for surface treatment of synthetic organic polymer mouldings (sometimes hereinafter abbreviated to "treatment apparatus") according to a first embodiment of the present invention is capable of effecting modification of the surface of a synthetic organic polymer moulding by preliminarily heating the moulding, contacting the moulding with an ultraviolet light absorbing solvent, and subsequently irradiating the surface of the moulding with ultraviolet light. The treatment apparatus comprises a preliminary heating chamber, a solvent treatment chamber, an ultraviolet light irradiation chamber and a transfer mechanism for automatically transferring the moulding between all of the chambers.

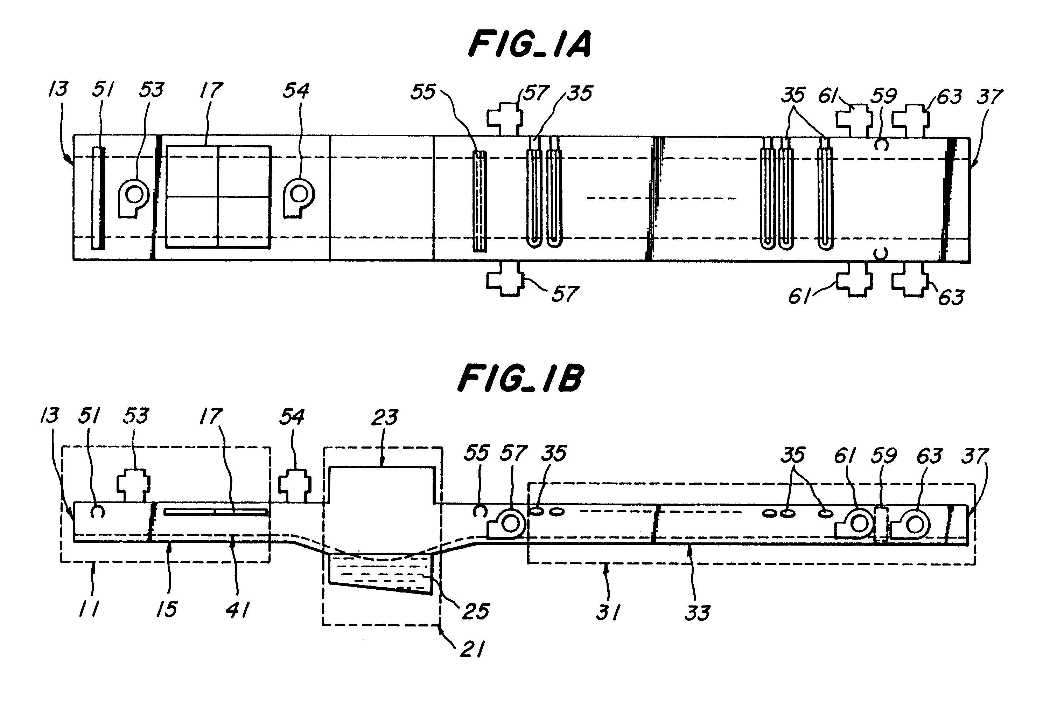

Figures 1A and 1B are respectively a plan view and a side view schematically showing the constitution of the treatment apparatus of the first embodiment. In this case, the treatment apparatus is an example of a structure in which constituent parts are disposed linearly.

In Figures 1A and 1B, a preliminary heating chamber 11, which can heat a synthetic organic polymer moulding, in this example includes a tunnel furnace-like housing 15 having an inlet 13 for introducing a moulding into the treatment apparatus and a heater section 17 provided inside the housing 15. In this example, the heater section 17 may be constituted by, for example, an infrared source such as a far infrared panel heater. However, the heater section 17 may be constituted by other suitable heaters such as a source of infrared radiation other than far infrared radiation (a halogen lamp or the like), a microwave heater, a high frequency heater, hot-air apparatus, or an electrical heater. The shape and rated output of the heater section 17 are determined by consideration of the shape and size of the moulding to be treated and the required treatment time.

A solvent treatment chamber 21 for contacting an ultraviolet light absorbing solvent with the preliminarily heated moulding includes in this example a housing 23 and a solvent tank 25 provided inside the housing 23. The solvent tank 25 is made of a suitable material having resistance to the above-mentioned ultraviolet light absorbing solvent. The solvent tank 25 may include a temperature control means (not shown) and a circulation apparatus (not shown) for maintaining the temperature of the ultraviolet light absorbing solvent in the tank constant. In such a case, the solvent may be maintained at a given temperature of, for example, 25 to 40°C. An ultrasonic wave generator may be provided inside the solvent tank 25 for the purpose of promoting contact of the ultraviolet light absorbing solvent with the moulding.

A single type of solvent may be put into the solvent tank 25 or a mixture of two or more kinds of solvent may be put into the solvent tank 25, if required.

The heated moulding is immersed in the solvent tank 25 containing the ultraviolet light absorbing solvent to effect contact of the moulding with the solvent, detailed explanation of which will be given later.

An ultraviolet light irradiation chamber 31 in this example includes a tunnel furnace-like housing 33, a synthetic quartz low pressure mercury lamp 35 provided inside the housing 33 and arranged to emit ultraviolet light having a main wavelength of 184.9 nm, and an outlet 37 provided at an end portion of the housing 33 in the transfer direction for withdrawing the moulding. In this example, a plurality of linear low pressure mercury lamps 35 are laterally arranged at suitable intervals in the direction of transfer of the moulding. However, the position, number, and shape of the mercury lamps will be suitably determined with consideration given to the size of the moulding, the shape of the moulding, and the output capacity of the lamps. For example, where the shape of the moulding is spherical, the shape of the mercury lamp arrangement may be arched.

The reason why the low pressure mercury lamps 35 are made of synthetic quartz thereby enabling

4

ultraviolet light having a main wavelength of 184.9 nm to be obtained is based on a finding that modification of the surface of a moulding can be made effectively by irradiating the moulding with ultraviolet light having such a wavelength after the moulding has been contacted with an ultraviolet light absorbing solvent, detailed explanation of which will be given later.

A transfer mechanism, capable of changing the transfer speed, is in this case constituted by a belt conveyor 41 so provided that it passes inside the housing of the preliminary heating chamber 11, the solvent treatment chamber 21, and the ultraviolet light irradiation chamber 31. A moulding introduced into the inlet 13 is automatically transferred, by the movement of the belt conveyor 41, through the preliminary heating chamher 11, the solvent treatment chamber 21, the ultraviolet light irradiation chamber 31 and the outlet 37, in this order.

The transfer mechanism may be arranged or modified according to the shape of the moulding being handled. For example, where a moulding has a complicated shape, the transfer mechanism may have such a structure that the moulding is rotated on the belt conveyor at an appropriate time. By so doing, preliminary heating and ultraviolet irradiation of the moulding can be done uniformly.

The treatment apparatus of the example shown in Figures 1A and 1B includes the following features or devices for the purpose of effecting surface modification with certainty and with consideration given to the safety or workers.

An air curtain 51 is provided between the moulding inlet 13 and the heater section 17. An exhaust duct 53 is provided between the air curtain 51 and the heater section 17. The air curtain 51 prevents dust or the like from entering the treatment apparatus. The exhaust duct 53 forcibly exhausts solvent vapour, ozone, and the like to a place at which workers are unaffected, when the solvent vapour, ozone, and the like reaches the zone of the preliminary heating chamber 11. The air curtain 51 and the exhaust duct 53 can respectively control the blow-off rate and the exhaust rate at appropriate levels.

An exhaust duct 54, provided between the preliminary heating chamber 11 and the solvent treatment chamber 21, can forcibly exhaust from the treatment apparatus solvent evaporated from the solvent tank 25 of the solvent treatment chamber 21 and moving towards the preliminary heating chamber 11, before the solvent reaches the preliminary heating chamber 11. This exhaust duct 54 can control the exhaust rate at an appropriate level for avoiding cooling of a heated moulding.

A hot-air supplying means 55 is provided in a housing between the solvent treatment chamber 21 and the ultraviolet light irradiation chamber 31. The hot-air supplying means 55 can control the hot-air blow-off rate so that the solvent absorbed on the moulding can be appropriately evaporated. An exhaust duct 57 is provided between the hot-air supplying means 55 and the ultraviolet light irradiation chamber 31. An air curtain 59 is provided in the proximity of the outlet 37 of the ultraviolet light irradiation chamber 31. An exhaust duct 61 is provided between the air curtain 59 of the housing 33 and the ultraviolet light irradiation chamber 31, while an exhaust duct 63 is provided between the air curtain 59 of the housing 33 and the outlet 37. Therefore, ozone generated in the housing 33 of the ultraviolet light chamber 31 is confined in the housing 33 by air from the air curtain 59 and hot air from the hot-air supply means 55. Further, ozone in the housing 33 can be forcibly exhausted by the exhaust ducts 57 and 61 to a place at which workers are unaffected, for example, outdoors.

When a mechanism which can recover ultraviolet light absorbing solvent is mounted on each of the exhaust ducts 53, 54, 57, 61, 63 provided in the treatment apparatus, the solvent can be re-used.

Although not shown in the drawings, a control section may be provided in the treatment apparatus. This control section is used for controlling the temperature inside the preliminary heating chamber 11 and the amount of solvent in the solvent tank 25 inside the solvent treatment chamber 21, controlling circulation apparatus provided in the solvent tank 21, controlling the temperature of the solvent in the solvent tank, controlling the output of the ultrasonic wave generator, controlling the low pressure mercury lamp arrangement, controlling the transfer speed of the belt conveyor 41, controlling flow rates in the air curtains or the exhaust ducts, and the like. Explanation of the control section is omitted since this can employ known detection methods and control methods.

Operation of the treatment apparatus shown in Figures 1A and 1B will now be briefly explained.

A synthetic organic polymer moulding is placed on the belt conveyor 41 at the inlet 13. The moulding is transferred, accompanying the movement of the belt conveyor 41, through the inside of the housing 15 of the preliminary heating chamber 21. While moving through the housing 15, the moulding is heated in accordance with the amount of heat which is determined mainly by the transfer speed of the belt conveyor 41, the output of the far infrared panel heater, and the length of the housing 15. The moulding is then transferred, by the movement of the belt conveyor 41, into the solvent tank 25. After contact of the moulding with an ultraviolet light absorbing solvent in the solvent tank 25, the moulding is transferred into the housing 33 of the ultraviolet light irradiation chamber 31. While moving inside the housing 33, the moulding undergoes irradiation by ultraviolet light from the low pressure mercury lamp 35 provided in the housing 33. Thereafter, the moulding reaches the outlet 37.

Modification of the surface of the moulding can be automatically effected in this manner.

Preliminary Experiment

The effectiveness of the preliminary heating chamber and the ultraviolet light irradiation chamber included in the treatment apparatus of Figures 1A and 1B will now be explained with reference to the results of an example of a preliminary experiment.

A polypropylene type resin moulding was preliminarily heated by far infrared radiation until the temperature of the moulding was about 80°C. Subsequently, the moulding was immersed in benzene having a temperature of 30°C for 20 seconds. Thereafter, the moulding was irradiated with light from a low pressure mercury lamp using synthetic quartz glass as the lamp glass and placed at a distance of 5 cm from the moulding for 3 minutes. The moulding thus irradiated by the ultraviolet light was coated with an acrylic resin coating by spraying. The coating film was dried in air at room temperature for about 48 hours to prepare a moulding constituting Comparison Example 1.

A similar moulding to that used as the starting moulding in preparation of the moulding of Comparison Example 1 was immersed in benzene heated at a temperature of 55°C for 1 minute. The moulding was irradiated with light from the synthetic quartz low pressure mercury lamp under the same conditions as in the preparation of the moulding of Comparison Example 1. Thereafter, a coating film was formed and dried in the same manner as in the preparation of the moulding of Comparison Example 1, to form a moulding constituting Comparison Example 2.

The coating films of the mouldings of Comparison Examples 1 and 2 were crosscut using a crosscut guide to form squares having a length of each side of 2 mm. A cellophane tape was stuck to each coating film, followed by a peeling test. Table 1 shows the average values of the rates (%) of the coating film squares remaining after the peeling tests applied to both the crosscut coating films. As is apparent from the results, the adherence of the coating film formed on the moulding of Comparison Example 1, namely the preliminarily heated moulding, is superior to that in the case of the moulding of Comparison Example 2.

Accordingly, it can be said that, even if the ultraviolet light absorbing solvent is not heated and the time of contact of the moulding with the solvent is shortened, a coating film having excellent durability can be easily obtained if only the moulding is preliminarily heated.

## TABLE 1

|  | Adherence |
|---|---|
| Comparison Example 1 | 100 |
| Comparison Example 2 | 95 |

In order to test the significance of the irradiation wavelength, polypropylene type resin mouldings not subjected to preliminary heating were immersed in benzene maintained at 30°C for 5 minutes, taken out, and divided into two groups.

One group of mouldings was irradiated in air with light from a low pressure mercury lamp using natural quartz glass as the lamp glass and placed at a distance of 5 cm from the mouldings for 5 minutes. The mouldings irradiated by the ultraviolet light were coated with an acrylic resin coating by spraying. The resulting coating films were dried in air at room temperature for 48 hours to prepare mouldings constituting Comparison Example 3.

The other group of mouldings was irradiated in air with light from a low pressure mercury lamp using synthetic quartz glass as the lamp glass for 5 minutes. Coating films were formed on the mouldings in the same manner as in Comparison Example 3, and dried in the same manner as in Comparison Example 3 to prepare mouldings constituting Comparison Example 4.

The coating films of the mouldings of Comparison Examples 3 and 4 were crosscut using a crosscut guide to form squares having a length of each side of 2 mm. A cellophane tape was stuck to each coating film, followed by a peeling test. Table 2 shows the average values of the rates (%) of the coating film squares remaining after the peeling tests applied to both the crosscut coating films. As is apparent from the results, the adherence of the coating film formed on the mouldings of Comparison Example 4, namely the mouldings irradiated with light from the synthetic quartz mercury lamp was superior to that in the case of the mouldings of Comparison Example 3.

## TABLE 2

|  | Adherence |
| --- | --- |
| Comparison Example 3 | 5 |
| Comparison Example 4 | 42 |

A low pressure mercury lamp made of synthetic quartz is more apt to transmit light having a wavelength of 184.9 nm as compared with a low pressure mercury lamp made of natural quartz. Since the energy of light having a wavelength of 184.9 nm is high, a low pressure mercury lamp made of synthetic quartz is believed to be more effective in cutting the molecular chain of a moulding. Thus, it is believed that the use of a low pressure mercury lamp made of synthetic quartz provides an increased effect in modifying the surface of the moulding.

In the foregoing example, contact of a moulding with a solvent such as benzene is effected by immersing the moulding in a solvent tank. However, the contacting method is not limited to the abovementioned method. For example, a nozzle for jetting benzene may be provided above the belt conveyor 41 and benzene may have jetted from above against a moulding transferred by the belt conveyor thereby to effect contact of the moulding with the solvent. The solvent may be sprayed on the moulding.

Surface treatment apparatus according to a second embodiment of the present invention has a structure in which the preliminary heating chamber (provided in the apparatus of Figures 1A and 1B according to the first embodiment) is dispensed with. The apparatus comprises a solvent treatment chamber for contacting the surface of a synthetic organic polymer moulding with an ultraviolet light absorbing solvent heated to a predetermined temperature, an irradiation chamber for irradiating the solvent-contacted surface of the moulding with ultraviolet light having a main wavelength of 184.9 nm, and a transfer mechanism for transferring the moulding through the solvent treatment chamber and the irradiation chamber in this order. Examples of this embodiment will now be described with reference to two kinds of apparatus.

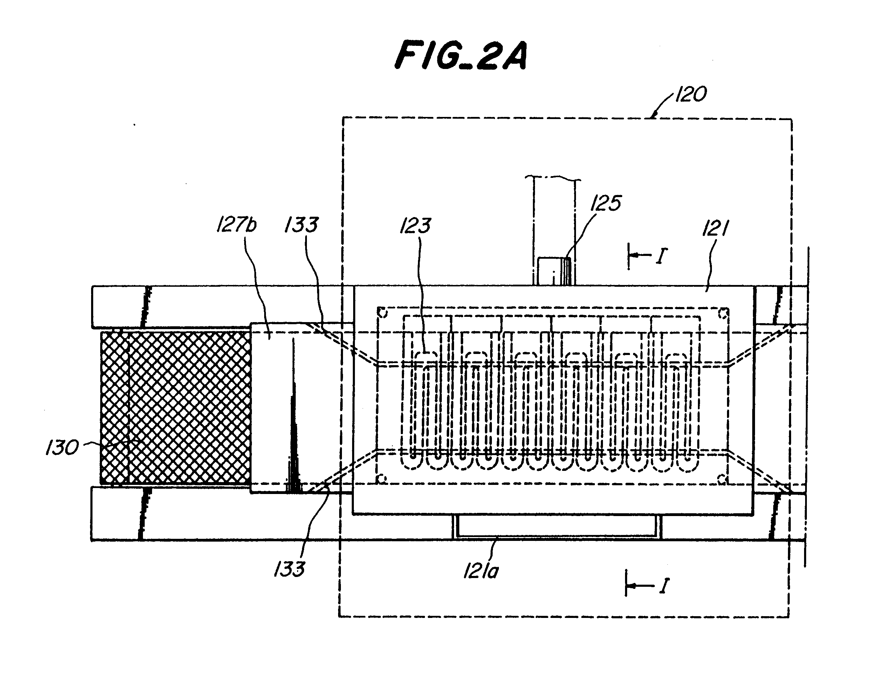

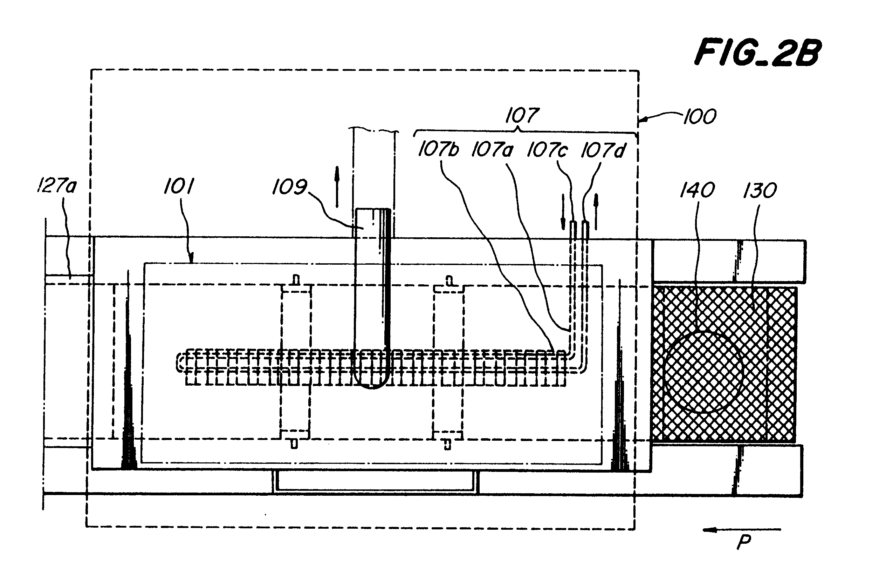

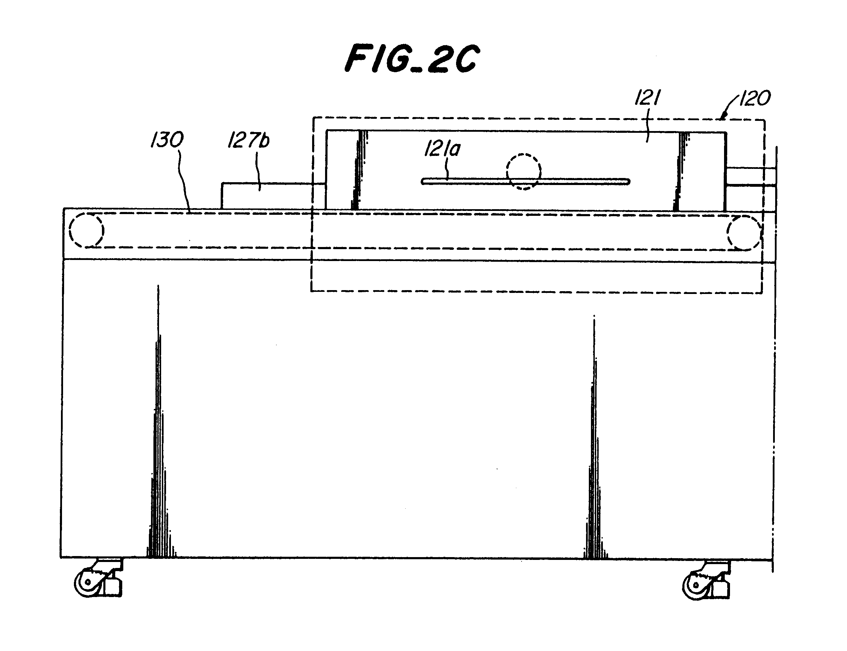

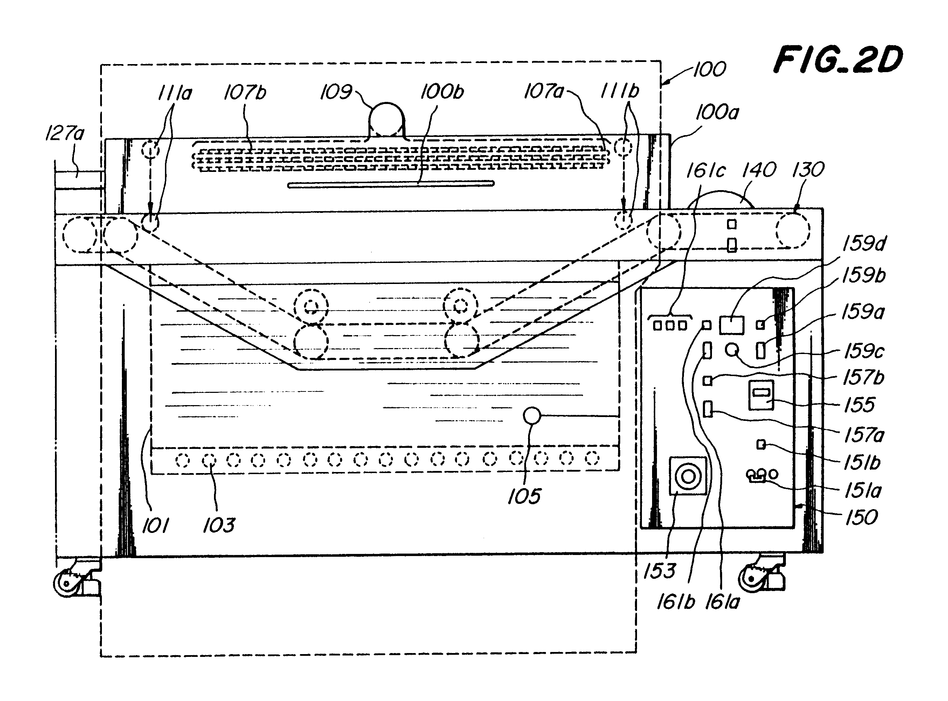

A first example of this apparatus is suitable for contacting a moulding with an ultraviolet light absorbing solvent according to an immersion method. Figures 2A and 2B are plan views respectively of a first (left side) portion and of a second (right side) portion of the apparatus, and Figures 2C and 2D are side views of the left side portion and the right side portion of the apparatus. These drawings schematically show such a surface treatment apparatus. Figure 2E is a cross-sectional view showing part of this apparatus along a line I-I in Figure 2A.

In Figures 2A to 2E, a solvent treatment chamber 100 is provided in which the surface of a synthetic organic polymer moulding (sometimes hereinafter abbreviated to "moulding") is contacted with an ultraviolet light absorbing solvent heated to a predetermined temperature.

The solvent treatment chamber 100 in this example includes a solvent tank 101 for immersing the moulding in ultraviolet light absorbing solvent. The solvent tank 101 is constituted of a suitable material having resistance to the ultraviolet light absorbing solvent (as previously mentioned) and has a solvent feeding inlet and a solvent withdrawing outlet (not shown). The solvent tank 101 includes a heater 103 for heating the ultraviolet light absorbing solvent in the tank and a thermocouple 105 for measuring the temperature of the solvent. The heater 103 and the thermocouple 105 are connected to a control section, which will be described later. The solvent is kept at a predetermined temperature by the heater 103 and the thermocouple 105. A solvent agitating means may be provided in the solvent tank 101 for keeping the solvent temperature uniform. An ultrasonic generator may be provided in the solvent tank 101 for promoting the effect of contact of the moulding with the solvent.

The upper portion of the solvent treatment chamber 100 is made cover-like, and the cover-like portion will hereinafter be referred to as a ceiling portion 100a. A solvent cooling means 107, which cools and liquefies the solvent evaporated from the solvent tank 101 and returns the liquefied solvent to the solvent tank 101, is attached to the ceiling portion 100a. In this case, the cooling means 107 is constituted by a pipe 107a for flow of cooling water or the like and a radiator 107b connected to this pipe. Cooling water fed to the pipe 107a from an inlet 107c is withdrawn from an outlet 107d, whereby cooling water is circulated to cool the radiator 107b. Cooling water may be supplied from a cooling means provided in the treatment apparatus itself, from a cooling means provided separately, or fresh water continuously supplied from a

7

water pipe in the factory. Thus, the cooling water can be supplied by any suitable method. An exhaust duct 109 is provided in a region of the ceiling portion 100a of the solvent treatment chamber 100 substantially confronting the cooling means 107. The exhaust duct 109 is provided for exhausting rising solvent vapour which cannot be liquefied by the cooling means 107. The solvent vapour is exhausted via the exhaust duct 109 to a place where it is not harmful to workers, or is sent to a device for reuse of the solvent.

The solvent treatment chamber 100 includes air curtains 111a and 111b. These air curtains are provided in such a manner that the solvent vapour evaporated from the solvent tank 101 is guided to the side where the cooling means 107 and the exhaust duct 109 are provided. In this case, the air curtains 111a, 111b are provided at positions above the end portions of the solvent tank 101 such that air is blown off downwardly. However, the positions of the air curtains may be changed according to the particular design. For example, they may be provided on the side walls of the solvent treatment chamber 100.

The ceiling portion 100a of the solvent treatment chamber 100 can be opened upwards for inspection of the inside of the solvent tank 101 or similar purpose. A handle 100b is provided for opening or closing the ceiling portion 100a.

In Figures 2A to 2E, an ultraviolet light irradiation chamber 120 includes a lamp housing 121 covering a belt conveyor acting as a transfer mechanism, as will be described later. The lamp housing 121 can be opened upwards for inspection of the inside of the ultraviolet light irradiation chamber or similar purpose. A handle 121a is provided for opening or closing the lamp housing 121. The lamp housing 121 includes low pressure mercury lamps 123 made of synthetic quartz which emit ultraviolet light having a main wavelength of 184.9 nm. In the lamp housing 121 of this example, a plurality of arched low pressure mercury lamps (see Figure 2E) are laterally arranged at suitable intervals along the direction of transfer of the moulding (the direction being shown by an arrow P). However, the position, number, and shape of the mercury lamps will in general be determined with consideration being given to the size of the moulding, the shape of the moulding, the output capacity of the lamps, and the like.

In the lamp housing 121 of the ultraviolet light irradiation chamber 120, there are provided an exhaust duct 125 for exhausting ozone generated in the ultraviolet light irradiation chamber and a toxic gas believed to be generated from the ultraviolet light absorbing solvent upon ultraviolet light irradiation, and covers 127a and 127b for preventing ultraviolet light from leaking out of the ultraviolet irradiation chamber 120.

In Figures 2A to 2E, a transfer mechanism, capable of changing the transfer speed, is constituted by a belt conveyor 130 arranged to pass inside the solvent tank 101 and the lamp housing 121 of the ultraviolet light irradiation chamber 120. In the ultraviolet light irradiation chamber 120, a moulding guide 133 is provided along the belt conveyor 130 for guiding a moulding to a position where the moulding is effectively irradiated by ultraviolet light.

In the treatment apparatus shown in Figures 2A to 2E, a moulding 140 introduced into an inlet of the treatment apparatus is automatically transferred, by the movement of the belt conveyor 130, through the solvent tank 101, the ultraviolet light irradiation chamber 120 and the outlet in this order, whereby a predetermined surface treatment is effected.

With respect to the transfer mechanism, various expedients may be taken according to the shape of the moulding and the like, as in the case of the surface treatment apparatus of Figures 1A and 1B.

In Figures 2A to 2E, a control section 150 includes a main power switch 151a, a main power pilot lamp 151b, a solvent treatment adjuster 153, an hour meter 155, an exhaust duct switch 157a, an exhaust duct pilot lamp 157b, a belt conveyor switch 159a, a belt conveyor pilot lamp 159b, a belt conveyor speed adjuster 159c, a belt conveyor speed meter 159d, a low pressure mercury lamp switch 161a, a pilot lamp 161b for a low pressure mercury lamp, and a monitor lamp 161c for the low pressure mercury lamp.

Experimental results of surface treatment using the apparatus of Figures 2A to 2E will now be described.

Experiment 1

Tetrachloroethylene and carbon tetrachloride (volume ratio : 95:5) were placed in the solvent tank 101. The conditions of the solvent temperature adjuster 153, the belt conveyor speed adjuster 159c, and the irradiation chamber 120 of the treatment apparatus were set so that the temperature of the solvent was about 60°C, a moulding was immersed in the solvent for 60 seconds, the total irradiation dose of ultraviolet light from the low pressure mercury lamp was 570 to 580 mJ/cm$^2$, and the ozone concentration in the irradiation chamber was 2 ppm or less.

Mouldings having a length of 400 mm, a width of 100 mm and a thickness of 3 mm were respectively prepared from:

(a) a homopolypropylene resin having a melt index (MI) of 40 as measured under a load of 2.16 kg at a temperature of 230°C; and

(b) an ethylene-propylene block copolymer having an ethylene content of 6.5 wt.%.

Moulding was conducted using a Sumitomo-Netstal Injection Moulding Machine 515 (manufactured by Sumitomo Heavy Industries, Ltd.) at an injection temperature of 220°C. The mouldings of the resin (a) and the resin (b) were respectively introduced into the surface treatment apparatus to effect a predetermined surface treatment. The moulding of the resin (a) so treated and the moulding of the resin (b) so treated will hereinafter be referred to as "moulding a" and "moulding b" respectively.

The wetting tension of the moulding a, the moulding b, a moulding of the resin (a) not subjected to the surface treatment (hereinafter referred to as "moulding c"), and a moulding of the resin (b) not subjected to the surface treatment (hereinafter referred to as "moulding d") were measured using primary standard substances for wetting tension (stipulated in JIS 6768-1977) composed of a mixture of formamide and ethylene glycol monoethyl ether. Table 3 shows the wetting tension of the mouldings a, b, c and d. It will be seen that the surface-treated mouldings are superior to the untreated mouldings with respect to wetting tension.

The adherence of a coating film to each of the mouldings a, b, c and d was examined as follows.

A two-pack urethane coating R271 (trade name of a product manufactured by Nippon Bee Chemical K.K.) was so applied on to a surface of each moulding that the film thickness was 30 to 35$\mu$m. The resulting coating film was dried at 90°C for 30 minutes. The coating film on each moulding was crosscut using a crosscut guide to form squares having a length of each side of 2 mm. A cellophane tape (Uni Cellophane Tape 18) was stuck on to each crosscut coating film, and peeled off. The adherence of each moulding was expressed in terms of the rate (%) of the coating film squares remaining after peeling off. Table 3 also shows the adherence of the mouldings. There was no remaining coating film on the untreated mouldings c and d.

Similarly, the mouldings a and b used in the above-described peeling test were immersed in water having a temperature of 40°C for 10 days, followed by the same peeling test as described above. Whether or not the adherence of each moulding to the coating film had deteriorated was examined. It was found that peeling of the coating film did not occur at all with respect to the mouldings a and b (see Table 3).

## TABLE 3

| | Wetting Tension dyne/cm | Adherence | |
|---|---|---|---|
| | | Initial Adhesion | Water Resistance |
| moulding a | 36 | 99 | 99 |
| moulding b | 42 | 100 | 100 |
| mouldings c and d (untreated) | 29 | 0 | - |

### Experiment 2

Mouldings were prepared from a polyacetal resin. Benzene was used as a solvent in the solvent tank. The condition of the treatment apparatus was changed so that the mouldings were immersed in the solvent for 5 minutes. The polyacetal resin mouldings were introduced into the treatment apparatus to effect a surface treatment.

The adherences of coating films to a surface-treated polyacetal resin moulding and an untreated polyacetal resin moulding were examined as follows.

A coating comprising a resin containing a polyacrylic ester as the main component and dissolved in a solvent containing a ketone as the main component was applied to the surfaces of the mouldings. In the case of the surface-treated moulding, the application was conducted about 30 minutes after the surface treatment. The coating films were dried in air at room temperature for 24 hours. The peeling test with cellophane tape was conducted in the same manner as in Experiment 1. The results are shown in Table 4. It was found that the treatment using the treatment apparatus of Figures 2A to 2E was effective for polyacetal resin mouldings as well.

## TABLE 4

|  | Adherence |
|---|---|
| treated moulding | 80 |
| untreated moulding | 0 |

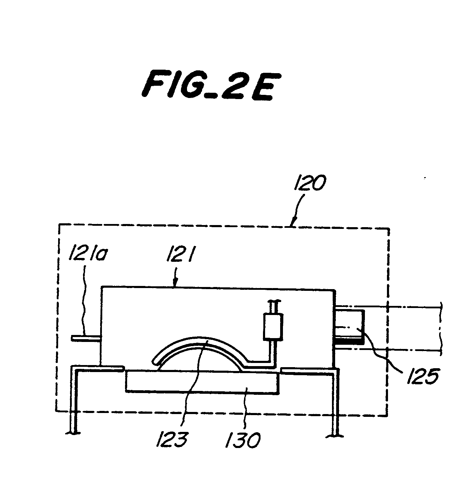

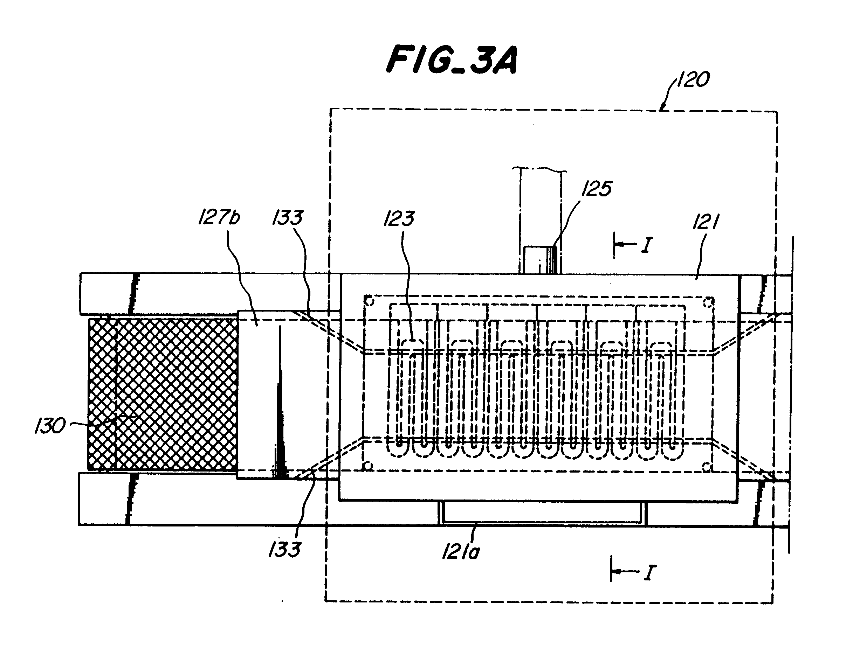

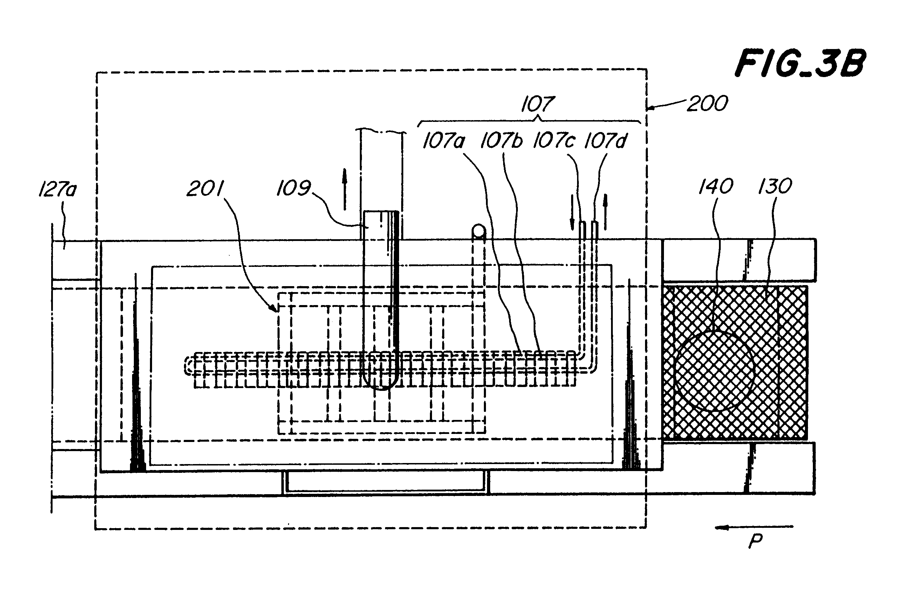

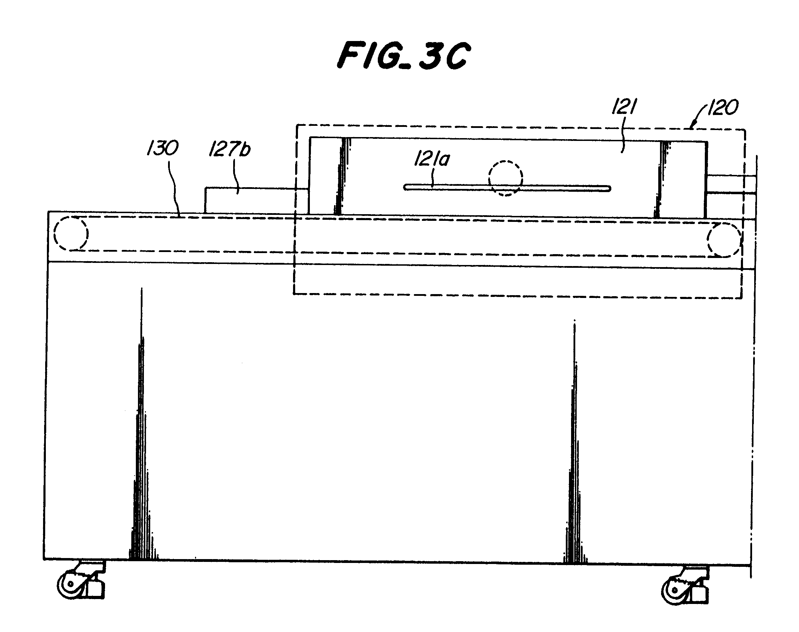

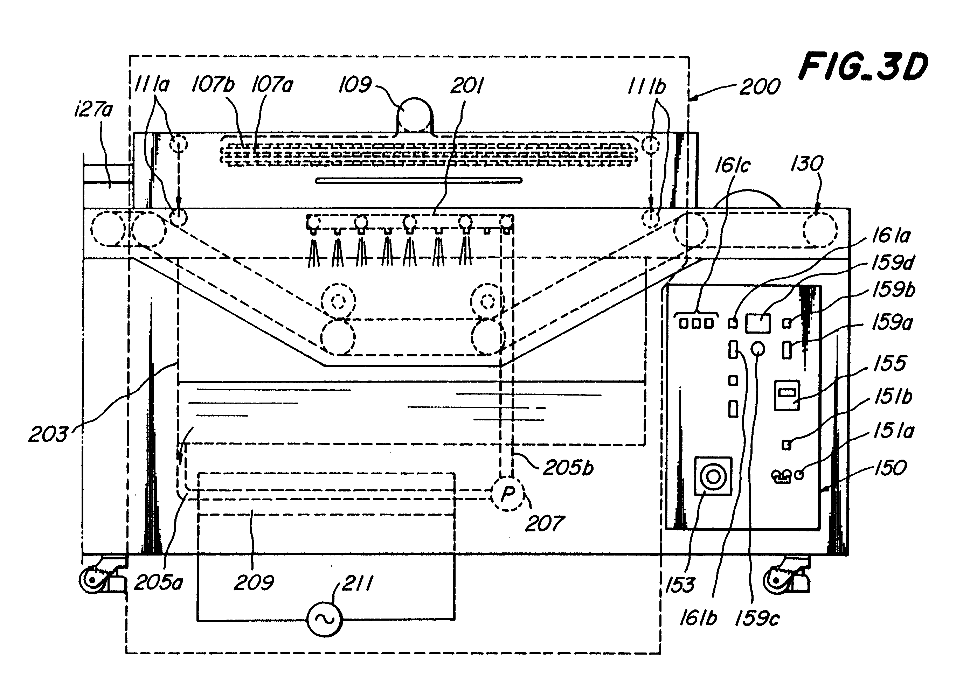

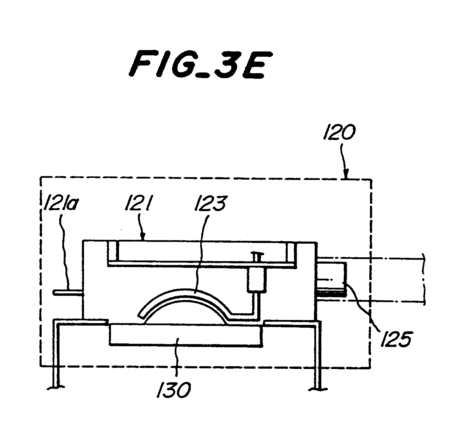

Another example of the treatment apparatus is so constituted that the contact of a moulding with an ultraviolet absorbing solvent is achieved by spraying the solvent on the moulding. Figures 3A and 3B are plan views respectively of a first (left side) portion and of a second (right side) portion of the apparatus, and Figures 3C and 3D are side views of the left side portion and the right side portion of the apparatus. These drawings schematically show such a surface treatment apparatus. Figure 3E is a cross-sectional view of part of the apparatus along a line I-I in Figure 3A. Since the constitutions of the ultraviolet light irradiation chamber and the transfer mechanism are the same as in the apparatus of the first example shown in Figures 2A to 2E, the same reference numerals have been used and further description of these features will be omitted. Further, with respect to the solvent treatment chamber, the same reference numerals as those in Figures 2A to 2E have been used to refer to the same features as in the first example and further description thereof will be omitted.

In Figures 3A to 3E, a solvent treatment chamber 200 is provided for contacting the surface of a moulding with an ultraviolet light absorbing solvent heated to a predetermined temperature.

The solvent treatment chamber 200 in this example includes a showering head 201 at a suitable position above the belt conveyor 130 so that heated ultraviolet light absorbing solvent can be sprayed from above on to a moulding transferred by the belt conveyor 130. The solvent treatment chamber 200 includes a solvent tank 203 which receives the spray solvent. The solvent tank 203 is connected to the showering head 201 through piping 205a, a solvent recycling pump 207, and piping 205b. A heater 209 is wound around an appropriate portion of the piping 205a. The solvent which is sent from the solvent tank 203 to the showering head 201 is heated by the heater 209. The heater 209 is heated by a power source 211 which is controlled by a temperature adjuster 153.

The previously-described treatment apparatus of Figures 1A and 1B is an example in which the preliminary heating chamber, the solvent treatment chamber, and the irradiation chamber are linearly disposed, while the examples of treatment apparatus shown in Figures 2A to 2E and in Figures 3A to 3E include the solvent treatment chamher and the irradiation chamber also being linearly disposed. However, when giving consideration to the installation position, the workability and similar criteria, the treatment apparatus may be, for example, arranged such that the moulding inlet and moulding outlet are disposed in substantially the same place, such as in a circular tunnel furnace-like apparatus. The apparatus may also be vertically disposed.

The treatment apparatus may be so constituted that a moulding can be moved intermittently. Intermittent movement is effective in the case where a moulding has a complicated shape. Specifically, when a moulding having a complicated shape must be uniformly irradiated by ultraviolet light, the moulding may be temporarily stopped during transfer thereof and irradiated by using an irradiation device having an optical system capable of uniformly irradiating the moulding with the ultraviolet light. Surface treatment of a bumper of a car is a good example of such a complicated shape.

As will be apparent from the foregoing description, in the use of the apparatus for surface treatment of a synthetic organic polymer moulding according to the first embodiment of the invention which includes a preliminary heating chamber, a solvent treatment chamber, an ultraviolet light irradiation chamber, and a transfer mechanism for automatically transferring a moulding through the chambers, the surface of the synthetic organic polymer moulding can be easily modified so that coating, printing, adhesion, or the like of the moulding can be effected with a high adherence.

In the use of this treatment apparatus, even if the ultraviolet light absorbing solvent is not heated, the same effect as in the case where it is heated can be obtained by heating the moulding itself. When the ultraviolet light absorbing solvent is heated, a device for cooling the evaporated solvent for its recovery is necessary because the amount of the evaporated solvent otherwise increases significantly. In contrast to this, such a device is unnecessary in the treatment apparatus of the first embodiment.

In the treatment apparatus embodying the present invention, significant consideration is given to the safety of workers, as will be apparent from the description of the structure of the apparatus.

The apparatus of the second embodiment is such that a synthetic organic polymer moulding can be automatically surface-treated without preliminary heating thereof. According to this apparatus, the surface of the synthetic organic polymer moulding can be easily modified so that coating, printing, adhesion, or the like of the moulding can be effected with high adherence, and in this apparatus as well, consideration is given to the safety of workers. The apparatus may be relatively small in size since a preliminary heating chamber is not necessary. The apparatus is suitable for surface treatment of a moulding having a large specific heat, which moulding would be difficult to heat as a preliminary step.

Thus, there can be provided a surface treatment apparatus for enabling modification of the surface of a synthetic organic polymer moulding to be economically and safely effected in a reliable and repeatable manner.

## Claims

1. Apparatus for surface treatment of a synthetic organic polymer moulding, the apparatus comprising:
   a treatment chamber (21;100;200) for contacting the surface of the synthetic organic polymer moulding with an agent such that the surface treatment takes place at a predetermined temperature; and
   an irradiation means (31;120) for irradiating the surface of the moulding with ultraviolet light;
   characterised in that:
   the agent in the treatment chamber (21;100;200) is an ultraviolet light absorbing solvent;
   the irradiation means comprises an irradiation chamber (31;120) for irradiating the surface of the surface treated moulding with ultraviolet light having a main wavelength of substantially 184.9 nm; and
   a transfer mechanism (41;130) is provided for transferring the moulding through the treatment chamber (21;100;200) and the irradiation chamber (31;120) in this order.

2. Apparatus according to claim 1, including a preliminary heating chamber (11) for preliminary heating of the synthetic organic polymer moulding before treatment in the treatment chamber (21), wherein the transfer mechanism (41) is further operable to transfer the moulding through the preliminary heating chamber (11) and to the treatment chamber (21).

3. Apparatus according to claim 1, wherein the solvent in the treatment chamber (100;200) is heated to the predetermined temperature.

4. Apparatus according to claim 1, claim 2 or claim 3, wherein the treatment chamber (21;100) includes a solvent tank (25;101) for immersing the moulding in the solvent.

5. Apparatus according to claim 1, claim 2 or claim 3, wherein the treatment chamber (200) includes a spray head (201) for spraying the moulding with the solvent.

6. Apparatus according to any one of the preceding claims, wherein the irradiation chamber (31;120) includes at least one low pressure mercury vapour lamp (35).

7. Apparatus according to any one of the preceding claims, wherein the synthetic organic polymer is a polypropylene type resin.

## Patentansprüche

1. Vorrichtung zur Oberflächenbehandlung eines synthetischen organischen Polymerformlings mit
   einer Behandlungskammer (21: 100; 200) für eine Behandlung der Oberfläche des synthetischen organischen Polymerformlings mit einem Mittel derart, daß die Oberflächenbehandlung bei einer vorbestimmten Temperatur stattfindet, und
   einer Bestrahlungseinrichtung (31; 120) zur Bestrahlung der Oberfläche des Formlings mit Ultraviolettlicht,
   **dadurch gekennzichnet,** daß

EP 0 285 446 B1

das Mittel in der Behandlungskammer (21; 100; 200) ein Ultraviolettlicht absorbierendes Lösungsmittel ist,

die Bestrahlungseinrichtung eine Bestrahlungskammer (31; 120) zur Bestrahlung der Oberfläche des oberflächenbehandelten Formlings mit Ultraviolettlicht mit einer Hauptwellenlänge von im wesentlichen 184,9 nm umfaßt und

ein Überführungsmechanismus (41; 130) zur Überführung des Formlings durch die Behandlungskammer (21; 100; 200) und die Bestrahlungskammer (31; 120) in dieser Reihenfolge vorgesehen ist.

2. Vorrichtung nach Anspruch 1 mit einer Vorerhitzungskammer (11) zum Vorerhitzen des synthetischen organischen Polymerformlings vor der Behandlung in der Behandlungskammer (21), wobei der Überführungsmechanismus (41) weiterhin so betätigbar ist, daß er den Formling durch die Vorerhitzungskammer (11) und zu der Behandlungskammer (21) überführt.

3. Vorrichtung nach Anspruch 1, bei der das Lösungsmittel in der Behandlungskammer (100; 200) auf die vorbestimmte Temperatur erhitzt wird.

4. Vorrichtung nach Anspruch 1, Anspruch 2 oder Anspruch 3, bei der die Behandlungskammer (21; 100) einen Lösungsmitteltank (25; 101) für das Eintauchen des Formlings in das Lösungsmittel enthält.

5. Vorrichtung nach Anspruch 1, Anspruch 2 oder Anspruch 3, bei der die Behandlungskammer (200) einen Sprühkopf (201) zum Besprühen des Formlings mit dem Lösungsmittel enthält.

6. Vorrichtung nach einem der vorausgehenden Ansprüche, bei der die Bestrahlungskammer (31: 120) wenigstens eine Niederdruckquecksilberdampflampe (35) enthält.

7. Vorrichtung nach einem der vorausgehenden Ansprüche, bei der das synthetische organische Polymer ein Harz vom Polypropylentyp ist.

**Revendications**

1. Appareil pour le traitement superficiel d'un article moulé à base de polymère organique synthétique, ledit appareil comprenant :
   - une chambre de traitement (21 ; 100 ; 200) pour amener la surface de l'article moulé à base de polymère organique synthétique au contact d'un agent tel que le traitement superficiel s'effectue à une température prédéterminée ; et
   - un moyen d'irradiation (31 ; 120) pour irradier la surface de l'article moulé au moyen d'une lumière ultraviolette ;
   caractérise en ce que l'agent contenu dans la chambre de traitement (21 ; 100 ; 200) est un solvant absorbant la lumière ultraviolette, le moyen d'irradiation comprend une chambre d'irradiation (31 ; 120) pour irradier la surface de l'article moulé traité superficiellement avec une lumière ultraviolette ayant une longueur d'onde principale d'environ 184,9 nm, et il est prévu un mécanisme de transfert (41 ; 130) pour transférer l'article moulé dans la chambre de traitement (21 ; 100 ; 200) et dans la chambre d'irradiation (31 ; 120), dans cet ordre.

2. Appareil selon la revendication 1, comprenant une chambre de chauffage préliminaire (11) pour un chauffage préliminaire de l'article moulé à base de polymère organique synthétique avant le traitement dans la chambre de traitement (21), où le mécanisme de transfert (41) peut fonctionner en outre de façon à transférer l'article moulé dans la chambre de chauffage préliminaire (11) et vers la chambre de traitement (21).

3. Appareil selon la revendication 1, où le solvant contenu dans la chambre de traitement (100 ; 200) est chauffé à la température prédéterminée.

4. Appareil selon la revendication 1, 2 ou 3, où la chambre de traitement (21 ; 100) comprend un réservoir de solvant (25 ; 101) pour immerger l'article moulé dans le solvant.

5. Appareil selon la revendication 1, 2 ou 3, où la chambre de traitement (200) comprend une tête de pulvérisation (201) pour pulvériser le solvant sur l'article moulé.

12

6. Appareil selon une quelconque des revendications précédentes, où la chambre d'irridiation (31 ; 120) comprend au moins une lampe à vapeur de mercure (35) à basse pression.

7. Appareil selon une quelconque des revendications précédentes, où le polymère organique synthétique est une résine du type polypropylène.

## FIG_IA

## FIG_IB

EP 0 285 446 B1

# FIG. 2A

FIG_2B

EP 0 285 446 B1

# FIG.2C

FIG. 2D

EP 0 285 446 B1

# FIG_2E

# FIG_3A

EP 0 285 446 B1

**FIG.3B**

FIG. 3C

EP 0 285 446 B1

FIG.3D

EP 0 285 446 B1

# FIG_3E